# EUROPÄISCHE PATENTSCHRIFT

(11) **EP 1 748 464 B1**
(45) Veröffentlichungstag und Bekanntmachung des Hinweises auf die Patenterteilung: **12.10.2011**
(21) Anmeldenummer: 06015412.7
(22) Anmeldetag: 25.07.2006
(51) Int. Cl.: H01J 35/10, C04B 35/83, C04B 41/85

(54) **Drehanode sowie Verfahren zum Herstellen eines Kühlkörpers einer Drehanode**
Rotary anode and method of fabrication of a heat sink of a rotary anode
Anode tournante et procédé de fabrication d'un dissipateur thérmique pour une anode tournante

(30) Priorität: 25.07.2005 DE 102005034585; 22.12.2005 DE 102005062074
(43) Veröffentlichungstag der Anmeldung: 31.01.2007
(73) Patentinhaber: Schunk Kohlenstofftechnik GmbH, 35452 Heuchelheim (DE)
(72) Erfinder: Weiss, Roland, Dr., 35452 Heuchelheim (DE); Scheibel, Thorsten, 61231 Bad Nauheim (DE); Ebert, Marco, 35083 Wetter (DE); Henrich, Martin, 35582 Wetzlar (DE)
(74) Vertreter: Stoffregen, Hans-Herbert

(56) Entgegenhaltungen:
- EP-A2- 0 629 593
- WO-A1-99/45564
- DE-A1- 10 301 069
- US-B1- 6 430 264
- US-B1- 6 907 106
- MATTHEIJ P ET AL: "Tailored fiber placement-Mechanical properties and applications" JOURNAL OF REINFORCED PLASTICS AND COMPOSITES, TECHNOMIC PUBLISHING, US, Bd. 17, Nr. 9, 1. Januar 1998 (1998-01-01) , Seiten 774-786, XP009133250 ISSN: 0731-6844

## Beschreibung

Die Erfindung bezieht sich auf eine Drehanode, insbesondere einer Röntgenröhre, mit einer Drehachse umfassend einen die Drehachse koaxial umgebenden rotationssymmetrisch ausgebildeten Kühlkörper aus Kohlefaserwerkstoff mit entlang der Drehachse sich erstreckenden Kohlenstofffasern sowie einen quer zur Drehachse sich erstreckenden Brennring. Ferner nimmt die Erfindung Bezug auf ein Verfahren zum Herstellen eines rotationssymmetrischen Kühlkörpers einer um eine Drehachse drehbaren Drehanode mit entlang der Achse verlaufenden Kohlenstofffasern hoher Wärmeleitfähigkeit.

Eine Drehanode mit einem Kühlkörper der eingangs genannten Art ist aus der DE-B-103 04 936 bekannt. Um die auf dem Brennring, also auf der Targetoberfläche auftretenden hohen Temperaturen gut abzuleiten, weist der Kühlkörper eine kelchförmige Geometrie auf, um die innerhalb des Kühlkörpers verlaufenden Kohlenstofffasern hoher Wärmeleitfähigkeit stumpf sowohl an der Targetunterseite als auch an einem koaxial zur Drehachse verlaufenden Kühlrohr enden zu lassen, das von einem Kühlmittel durchströmt ist.

Aus der US-A-5,943,389 ist eine Drehanode bekannt, bei der eine wärmeleitende Verbindung über einen C-Verbundkörper erfolgt, in dem parallel zueinander verlaufende Kohlenstofffasern über eine Kohlenstoffmatrix verbunden sind. Die Wärmeleitfähigkeit der Kohlenstofffasern kann im Bereich zwischen 400 W/mK bis 1000 W/mK liegen.

Der JP-A-61-022546 ist eine Drehanode zu entnehmen, die aus Kohlenstofffasern enthaltenden Formteilen, sogenannten Prepregs zusammengesetzt ist. Dabei können die Fasern in einer Richtung verlaufen.

Aus der DE-B-40 12 019 ist eine Drehanode für eine Röntgenröhre bekannt. Die Drehanode weist einen hohlen Anodenteller auf, dem über die hohl ausgebildete Welle Kühlflüssigkeit zugeführt wird.

Zur Abfuhr der Wärme bei Drehanoden haben sich Faserverbundwerkstoffe bewährt, da diese gegenüber den üblicherweise zum Einsatz gelangenden Metallkörpern leichter sind, so dass die Drehanoden mit hoher Frequenz rotieren und/oder größere Durchmesser aufweisen können. Allerdings hat die Praxis gezeigt, dass die Wärmeableitung den Anforderungen hoch entwickelter Röntgengeräte, insbesondere CT-Geräten nicht hinreichend genügt, da nach wie vor eine Aufheizung gegeben ist, die eine häufige Unterbrechung des Betriebs verlangt. Nachteilig bekannter Kohlenstoffverbundwerkstoffe nutzender Drehanode ist des Weiteren, dass häufig zusätzliche von einem Kühlmedium durchströmte Kühlrohre integriert werden müssen, so dass der konstruktive Aufbau entsprechender Drehanoden aufwendig ist.

Ein Kühlkörper nach der EP-A-0 629 593, der für Bremsbeläge oder elektronische Einrichtungen bestimmt ist, weist eine aus Kohlenstofffasern bestehende Preform mit einer aus Kohlenstoffmaterial bestehenden Matrix auf. Die Kohlenstofffasern verlaufen parallel zueinander. Zur Herstellung der Preform werden zunächst Pechfasern um einen Spulenkörper gewickelt, um einen Zylinder zu bilden, der sodann in Abschnitte getrennt wird, die ihrerseits anschließend eben gebogen werden. Sodann erfolgt ein Carbonisieren und Grafitieren der flächigen Preformplatten.

Der vorliegenden Erfindung liegt die Aufgabe zu Grunde, einen Kühlkörper einer Drehanode sowie ein Verfahren zur Herstellung eines Kühlkörpers der eingangs genannten Art so weiterzubilden, dass eine hohe Wärmeleitfähigkeit erzielbar ist, um somit die mit dem Kühlkörper zu kühlende Drehanode im Vergleich zu bekannten Drehanoden über längere Zeit ununterbrochen nutzen zu können. Auch soll der Kühlkörper eine geringe Masse aufweisen, damit die Drehanode mit hoher Frequenz gedreht und/oder mit großem Durchmesser ausgebildet werden kann.

Zur Lösung der Aufgabe wird eine Drehanode der eingangs genannten Art im Wesentlichen dadurch weitergebildet, dass Basis des Kühlkörpers eine nach dem Tailored-Fiber-Placement-Verfahren (TFP) hergestellte Preform ist, also der Kühlkörper unter Verwendung eines nach dem Tailored-Fiber-Placement-Verfahren (TFP) hersgestellten Preform hergestellt ist, dass der Kühlkörper eine Hohlzylinderform aufweist und einteilig ausgebildet ist, dass die Kohlenstofffasern über ihre gesamte Länge parallel oder im Wesentlichen parallel zu der Achse verlaufen und eine Wärmeleitfähigkeit λ mit λ ≥ 250 W/m · K aufweisen und dass die Kohlenstofffasern über eine Kohlenstoff enthaltende Matrix verbunden sind, deren Graphitkristallite entlang der Kohlenstofffasern ausgerichtet sind.

Erfindungsgemäß wird ein Kühlkörper benutzt, der in Kontakt - vorzugsweise grundsätzlich unmittelbar - mit dem Brennring einer Drehanode steht, bei dem die Kohlenstofffasern über ihre gesamte Länge parallel oder im Wesentlichen parallel zu der Drehachse des Anodenkörpers angeordnet sind. Ferner sind die Graphitkristallite der Kohlenstoffmatrix, über die die Kohlenstofffasern verbunden sind, entlang der Fasern ausgerichtet, wodurch eine hohe Wärmeleitfähigkeit erzielbar ist, die größer als 250 W/mK, insbesondere größer als 600 W/mK ist, bevorzugterweise im Bereich von 600 W/mK und 650 W/mK liegt. Da die Graphitkristallite auch an den Kohlenstofffasern angelagert sind, wird hierdurch die Wärmeleitfähigkeit erhöht. Über den Kühlkörper selbst, d. h. der in Bezug auf den Brennring abgewandten Stirnfläche wird sodann die Wärme abgestrahlt. Zusätzliche von einem Kühlfluid durchströmte Kühlkanäle sind nicht erforderlich.

Der monolithisch ausgebildete Kühlkörper weist die Form eines Hohlzylinders auf, wobei zur Stabilisierung entlang dessen Umfangs- und/oder Innenfläche ein Stützring verlaufen kann, der z. B. auf den Kühlkörper aufgepresst wird. Der Stützring sollte aus einem Kohlenstoff-Faserwerkstoff (CFC) bestehen.

Unabhängig hiervon ist die Basis des Kühlkörpers eine Preform, die nach dem Tailored-Fiber-Placement (TFP)-Verfahren hergestellt ist. Hierzu werden insbesondere Endloskohlenstofflangfasern bzw. Kohlenstofflangfasern auf ein Gewebegrundmaterial genäht, wobei die Fasern mäanderformig verlegt werden, so dass die Fasern mit Ausnahme der gebogenen Enden parallel zueinander ausgerichtet sind. Vor der Wärmebehandlung der so hergestellten Preform werden die gebogenen Enden abgeschnitten. Vorzugsweise werden die Kohlenstofflangfasern derart mit dem Gewebegrundmaterial vernäht, dass die gebogenen Enden seitlich über das eine Streifenform aufweisende Gewebegrundmaterial vorstehen. Es besteht selbstverständlich auch die Möglichkeit, dass das Gewebegrundmaterial nach Aufnähen der Kohlenstofflangfasern in Streifen unterteilt wird, so dass gleichzeitig mehrere Basen nach dem TFP-Verfahren hergestellt werden, die sodann um einen Zylinderkörper gewickelt werden, um den Kühlkörper herzustellen.

Daher zeichnet sich die Erfindung auch durch ein Verfahren zur Herstellung eines rotationssymmetrischen Kühlkörpers einer um eine Drehachse drehbaren Drehanode mit entlang der Achse verlaufenden Kohlenstofffasern hoher Wärmeleitfähigkeit durch die Verfahrensschritte aus
- Herstellen einer streifenförmigen Preform nach dem Tailored-Fiber-Placement-Verfahren (TFP) durch Aufnähen von Kohlenstofffasern auf einem Gewebegrundmaterial derart, dass bei der zu nutzenden Preform die Kohlenstofffasern parallel oder im Wesentlichen parallel zueinander verlaufen,
- Wickeln der streifenförmigen Preform auf einen Zylinderkörper,
- Imprägnieren der Preform mit Kohlenstoff oder einem durch Carbonisieren in Kohlenstoff umwandelnden Material,
- Wärmebehandlung der imprägnierten Preform,
- ein- oder mehrfaches Nachverdichten der wärmebehandelten Preform,
- Hochtemperaturbehandlung und
- mechanische Endbearbeitung des so hergestellten Körpers zur Erzielung der Endgeometrie des Kühlkörpers.

Wärmebehandlung und Nachverdichtung erfolgen dabei derart, dass die Graphitkristallite der die Kohlenstofffasern verbindenden, durch das Imprägnieren und Wärmebehandeln gebildeten Matrix entlang der Kohlenstofffasern ausgerichtet sind. Hierdurch wird die Wärmeleitfähigkeit zusätzlich erhöht, so dass die gewünschte Kühlwirkung erzielbar ist.

Bedingt durch die Ausrichtung der graphitischen Kristallitschichten in den Kohlenstofffasern und deren Orientierung an der Faseroberfläche ist eine Nahordnung der Graphitkristalle der Matrix entlang der Faseroberfläche durch Wahl geeigneter Behandlungsparameter und geeigneter Kohlenstoffmatrixsysteme möglich. Geeignete Kohlenstoffmatrixsysteme sind gut graphitierbare Stoffe wie Pech oder Pyrographit. Thermisch vernetze Harze sollten vermieden werden, da die Graphitiereigenschaften nicht so gut sind.

Des Weiteren kann zur Ausrichtung der Kristallite entlang der Kohlenstofffasern das Graphitieren im Vakuum erfolgen. Dabei muss jedoch Sublimation des Kohlenstoffes weitgehend vermieden werden. Alternativ oder zusätzlich sollte während des Graphitierens auf die Kohlenstofffasern eine Spannung bzw. ein Zug einwirken. All dies bewirkt das Ausrichten der Kristallite entlang der Kohlenstofffasern mit der Folge, dass die gewünschte Wärmeleitfähigkeitserhöhung auftritt.

Um eine hohe Wärmeleitfähigkeit zu erzielen, sollte ferner der Volumengehalt der Kohlenstofffasern zwischen 40 % und 80 %, insbesondere zwischen 60 % und 70 % liegen. Dies wird dadurch erreicht, dass die nach dem Tailored-Fiber-Placement-Verfahren hergestellte Preform mit definierten Zugkräften um den Zylinderkörper gewickelt wird. Als bevorzugte Zugkräfte sind Werte zwischen 3 kp und 15 kp, insbesondere 5 kp und 10 kp anzugeben.

Eine weitere Möglichkeit, den Volumengehalt der Kohlenstofffasern auf einen gewünschten Wert, insbesondere zwischen 60 Vol.-% und Vol.-70 % einzustellen, besteht darin, dass Andruckrollen verwendet werden, welche die Faserbahnen beim Aufwickeln auf den Kern verdichten.

Das Tailored-Fiber-Placement-Verfahren selbst ist z. B. der Literaturstelle "Mattheij et al: Tailored fiber-placement-mechanical properties and applications, Journal of Reinforced Plastics and Composites, Vol. 17, Nr. 9/1998, S. 774 - 786, zu entnehmen. Insoweit wird auf die diesbezügliche Offenbarung ausdrücklich Bezug genommen.

Eine so hergestellte Preform hat im Ausgangszustand üblicherweise eine Wärmeleitfähigkeit zwischen 115 W/mK und 200 W/mK, wodurch der Vorteil gegeben ist, dass die Preform zum Herstellen des Kühlkörpers gut handelbar ist und eine genügende mechanische Festigkeit aufweist. Als Fasern können graphitierbare aber auch bereits graphitierte Fasern, insbesondere Kohlenstofffasern auf Pechbasis verwendet werden. Der Durchmesser der Fasern sollte im Bereich zwischen 4 µm und 9 µm, vorzugsweise bei 8 µm liegen.

Nach dem Wickeln der Preform auf den Kern erfolgt eine Wärmebehandlung derart, dass in situ die Wärmeleitfähigkeit erhöht wird, wobei insbesondere eine Wärmeleitfähigkeit im Bereich zwischen 600 W/mK und 650 W/mK zu bevorzugen ist. Unabhängig hiervon sollte die Wärmeleitfähigkeit auf jeden Fall größer als 250 W/mK sein.

Die hohen Wärmeleitfähigkeiten werden dadurch erzielt, dass die Fasern in der Preform mittels CVI-Imprägnierung mit PyC bzw. durch Imprägnierung mit Matrixprekursoren, die gut graphitierbar sind, stabilisiert und fixiert werden. Anschließend wird die so fixierte Preform einer Hochtemperaturbehandlung bei Temperaturen T mit vorzugsweise T > 2800 °C unterworfen, so dass sowohl die Fasern als auch die Matrix graphitieren und durch die Fixierung der Fasern in der Matrix Streckgraphitierungseffekte durch plastische Verformung der Fasern zur Wärmeleitfähigkeitserhöhung durch verbesserte Graphitisierung benutzt werden.

Die Fasern der Preform bzw. die Preform selbst können vor der Trocken- oder Nassimprägnierung mit Harzen oder Pechen behandelt sein, wobei anschließend ein Härten erfolgt. Sodann wird eine Nassimprägnierung mit Harzen oder Pechen oder eine Gasphasenimprägnierung insbesondere im CVI-Verfahren mit Pyrokohlenstoff (PyC) durchgeführt. Anschließend erfolgt eine Wärmebehandlung, wobei bei der Verwendung von Harzen und Pechen zunächst ein Carbonisieren und anschließend ein Graphitieren, bei der Trockenimprägnierung ausschließlich ein Graphitieren erfolgt. Das Carbonisieren zum Umwandeln des Imprägniermittels in Kohlenstoff erfolgt vorzugsweise im Temperaturbereich zwischen 700 °C und 1200°C, vorzugsweise im Bereich zwischen 900 °C und 1050 °C. Bevorzugte Graphitisierungstemperaturen liegen im Bereich zwischen 2400 °C und 3500 °C, vorzugsweise zwischen 2600 °C und 3300 °C.

Zur Nassimprägnierung werden Materialien mit hoher Kohlenstoffausbeute benutzt, um eine Umwandlung in C zu ermöglichen. Bei der Nassimprägnierung wird dem Carbonisieren ein Wärmebehandlungsschritt vorgeschaltet, durch den ein Härten bzw. Vemetzen des Imprägniermittels erfolgt, oder bei Pechen ein Aufschmelzen des Imprägniermittels.

Während der Wärmebehandlung sollte der integrale, also monolithische Kühlkörper in Form eines Hohlzylinders auf einer Platte abgestützt und insbesondere von einem Stützring umgeben sein, um sicherzustellen, dass bei der Wärmebehandlung eine unerwünschte Geometrieveränderung vermieden wird.

Wird das Imprägnieren bevorzugterweise nach dem Wickeln der Preform auf den Zylinderkörper durchgeführt, so besteht ohne Weiteres auch die Möglichkeit, dass zuvor zumindest eine Teilimprägnierung erfolgt.

Nach der Wärmebehandlung, d. h. dem Carbonisieren und Graphitieren erfolgt ein Nachverdichten, das ein Vakuum-Druckimprägnieren mit Härten, Carbonisieren und Graphitieren einschließt, um die Wärmleitfähigkeit zu verbessern. Dabei kann das Nachverdichten vorzugsweise zwei bis vier Mal erfolgen, ohne dass hierdurch die erfindungsgemäße Lehre eingeschränkt wird.

Durch das Nachverdichten wird nicht nur die Wärmeleitfähigkeit verbessert, sondern gleichzeitig wird die Dichte erhöht und die Porosität minimiert, wodurch wiederum die mechanische Festigkeit des Kühlkörpers verbessert wird. Insbesondere wird das Nachverdichten in einem Umfang durchgeführt, dass sich eine offene Porosität von weniger als 14 Vol.-%, vorzugsweise weniger als 10 Vol.-% und eine Dichte des fertiggestellten Kühlkörpers im Bereich zwischen 1,5 g/cm³ und 2,2 g/cm³, insbesondere im Bereich zwischen 1,75 g/cm³ und 2,0 g/cm³ ergeben.

Nach dem ein- oder mehrfachen Nachverdichten erfolgt eine Hochtemperaturbehandlung, die auch als Abschlussgraphitierung bezeichnet werden kann. Die Hochtemperaturbehandlung wird im Bereich zwischen 2400 °C und 3500 °C durchgeführt. Anschließend wird der so hergestellte Körper zur Endform bearbeitet, und zwar durch spanendes Bearbeiten. Gegebenenfalls wird sodann eine Stützstruktur in Form von CFC-Ringen aufgebracht, die hochfest sind. Die Stützringe können auf der Innen- und/oder Außenumfangsfläche aufgebracht werden.

Wahlweise kann nach der Endbearbeitung eine CVD-Beschichtung auf den Kühlkörper aufgebracht werden, um ein "particle release" zu vermeiden. Bevorzugterweise wird eine PyC-Beschichtung aufgebracht. Unabhängig sollte die Beschichtung einen hohen Emissionsfaktor ε mit 0,5 ≤ ε < 1,0, insbesondere 0,8 ≤ ε ≤ 0,9 aufweisen.

Es besteht auch die Möglichkeit, vor der diesbezüglichen Beschichtung den Kühlkörper in einem Hochtemperaturprozess zu reinigen. Durch die Reinigung wird die Kristallitbildung positiv beeinflusst, da sich an Stellen, an denen sich vor der Hochtemperaturgasreinigung Fremdatome befanden, eine besonders gute Kristallitbildung einstellt. Verunreinigungen können also gezielt zur Verbesserung der Graphitierbarkeit und damit zur Erhöhung der Wärmeleitfähigkeit eingesetzt werden, wenn sie in einem Hochtemperaturgasreinigungsprozess wieder entfernt werden.

Weitere Einzelheiten, Vorteile und Merkmale der Erfindung ergeben sich nicht nur aus den Ansprüchen, den diesen zu entnehmenden Merkmalen - für sich und/oder in Kombination-, sondern auch aus der nachfolgenden Beschreibung von den Zeichnungen zu entnehmenden bevorzugten Ausführungsbeispielen.

Es zeigen:
- Fig. 1: einen Schnitt durch eine Drehanode und
- Fig. 2: einen Abschnitt einer herzustellenden Preform.

Die erfindungsgemäße Lehre soll anhand eines für eine Drehanode 10 bestimmten Kühlkörpers erläutert werden, ohne dass hierdurch die Erfindung eingeschränkt werden soll.

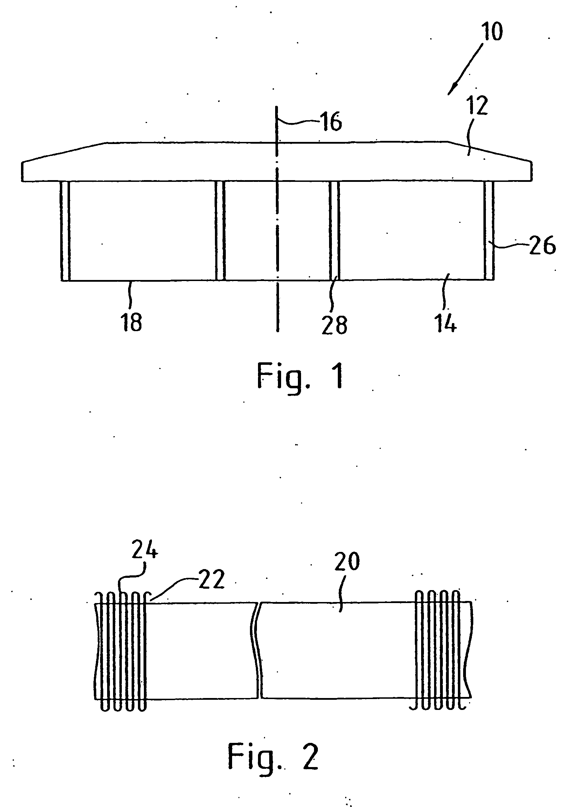

So ist in Fig. 1 rein prinzipiell eine Drehanode 10 insbesondere bestimmt für einen Computertomographen dargestellt. Die Drehanode 10 setzt sich aus einem insbesondere aus Wolfram bestehenden Brennring 12 und einem Kühlkörper 14 zusammen. Die Drehanode 10 ist auf einer nicht dargestellten Welle gelagert und um eine Achse 16 drehbar. Um eine hohe Messpunktdichte in kurzer Zeit zu erzielen, wird die Drehanode mit Frequenzen von 150 Hertz gedreht. Der Durchmesser kann im Bereich zwischen 150 mm und 250 mm liegen, ohne dass dies als Einschränkung auszulegen ist.

Um die Wärme von dem Brennring 12 gut ableiten zu können, wodurch sichergestellt ist, dass die Drehanode über einen langen Zeitraum ohne Unterbrechung eingesetzt werden kann, ist der Kühlkörper 14 ein Kohlenstoffverbundkörper, der aus parallel zur Achse 16 verlaufenden und parallel zueinander verlaufenden Kohlenstofffasern besteht, die über eine Kohlenstoffmatrix verbunden sind. Dabei erfolgt bei der Herstellung des Kühlkörpers 14 in situ eine Wärmeleitfähigkeitserhöhung derart, dass die Kohlenstofffasern eine Wärmeleitfähigkeit von mehr als 250 W/mK, insbesondere im Bereich zwischen 600 W/mK und 650 W/mK aufweisen. Hierdurch ist sichergestellt, dass von dem Brennring 12 über den Kühlkörper 14 abgeleitete Wärme in hinreichendem Umfang über die brennringabgewandte Stirnfläche 18 des Kühlkörpers 14 abgestrahlt werden kann.

Der Kühlkörper 14 besteht aus einer spiralförmig gewickelten Preform, die nach dem Tailored-Fiber-Placement-Verfahren hergestellt ist. Hierzu wird auf einem Gewebegrundmaterial 20, das eine hohe C-Ausbeute aufweist, eine Endloskohlenstofffaser 22 mäanderförmig abgelegt und aufgenäht. Sodann werden die gebogenen Abschnitte 24 vorzugsweise entlang der Ränder des Grundmaterials 20 abgeschnitten, so dass sich eine streifenförmige Preform ergibt, bei der die Kohlenstofffasern 22 parallel zueinander und senkrecht zur Längsachse des Grundmaterials 12 ausgerichtet sind. Eine entsprechende Preform wird sodann um einen als Kern zu bezeichnenden Zylinderkörper gewickelt, wobei die Kohlenstofffasern 22 parallel zur Achse des Kerns verlaufen. Das Wickeln um den Kern erfolgt dabei derart, dass ein gewünschter Faservolumengehalt erreicht wird, der insbesondere im Bereich zwischen 40 Vol.-% und 80 Vol.-%, vorzugsweise zwischen 60 Vol.-% und 70 Vol.-% liegen sollte. Hierzu werden Zugkräfte F zwischen 5 kp und 10 kp aufgewendet. Alternativ oder ergänzend können auf die Preform beim Aufwickeln auf den Kern Andruckrollen eingesetzt werden, wodurch ebenfalls ein Einstellen des Faservolumengehalts auf den gewünschten Wert erfolgt bzw. unterstützt wird. Anschließend erfolgt eine Nass- oder Gasphasenimprägnierung. Die Nassimprägnierung erfolgt dabei mit einem Material mit hoher Kohlenstoffausbeute, um eine Umwandlung in C zu ermöglichen. Insbesondere Harze und Peche sind zu nennen. Als Gasphasenimprägnierung kommt insbesondere das CVI-Verfahren mit PyC in Frage.

Zu erwähnen ist, dass bereits vor dem Aufwickeln der Preform auf den Kern die Fasern mit Harz oder Pech behandelt sein können, ohne dass die Erfindung verlassen wird.

Unabhängig hiervon erfolgt nach dem Imprägnieren eine Wärmebehandlung, wobei bei der Verwendung von Harzen oder Pechen zunächst ein Härten bzw. Vernetzen des Imprägniermittels erfolgt, während Peche zum Aufschmelzen vor dem Imprägnieren erwärmt werden müssen. Die Wärmebehandlung schließt ein Carbonisieren bei der Verwendung von Harzen und Pechen sowie ein Graphitieren und bei einer Gasphasenimprägnierung allein das Graphitieren ein. Das Carbonisieren erfolgt bevorzugterweise im Temperaturbereich zwischen 700 °C und 1200 °C, insbesondere im Bereich zwischen 900 °C und 1050 °C, wohingegen das Graphitieren zwischen 2400 °C und 3500°C, insbesondere im Bereich zwischen 2600 °C und 3300 °C durchgeführt werden sollte. Nach der Wärmebehandlung erfolgt ein Abkühlen, um sodann ein ein- oder mehrfaches Nachverdichten anzuschließen. Das Nachverdichten umfasst dabei ein Vakuum-DruckImprägnieren, um die Dichte zu erhöhen und die Porosität zu minimieren. Hierdurch wird die mechanische Festigkeit des herzustellenden Körpers erhöht. Insbesondere sollte der Kühlkörper 14 derart nachverdichtet werden, dass die Dichte ρ beträgt ρ > 1,85 g/cm³ .

Des Weiteren sollte eine Gasreinigung erfolgen, um Verunreinigungen zu entfernen. Hierdurch wird auch die Kristallitbildung erhöht.

Beim Nachverdichten können dem Imprägniermittel hochwärmeleitende Füllstoffe zugegeben sein.

Losgelöst erfolgt das Nachverdichten, d. h. das Imprägnieren, Härten bzw. Carbonisieren in einem Umfang, dass der herzustellende Körper eine offene Porosität von weniger als 14 Vol.-%, vorzugsweise weniger als 10 Vol.-% und/oder eine Dichte im Bereich zwischen 1,5 g/cm³ und 2,2 g/cm³, insbesondere im Bereich zwischen 1,75 g/cm³ und 2,0 g/cm³ aufweist.

Sodann wird eine Hochtemperaturbehandlung im Bereich zwischen 2400 °C und 3500 °C durchgeführt. Anschließend wird der Körper zur Endform bearbeitet, und zwar durch spanendes Bearbeiten. Gegebenenfalls kann der Körper mit einer Stützstruktur in Form von CFC-Ringen versehen werden, die hochfest sind. Entsprechende Ringe können außen und/oder innen auf den Hohlzylinderkörper aufgebracht werden.

Zum Schluss kann gegebenenfalls eine CVD-Beschichtung wie PyC-Beschichtung erfolgen, um ein "particle release" zu vermeiden. Die Beschichtung sollte einen hohen Emissionsfaktor ε zwischen 0,5 ≤ ε < 1, insbesondere zwischen 0,8 ≤ ε ≤ 0,9 aufweisen.

Sofern eine Reinigung vorgesehen ist, sollte diese zwischen der Endbearbeitung und der CVD-Beschichtung durchgeführt werden. Für die Verbesserung der Reinheit und des Graphitierungsgrades wird eine Hochtemperaturgasreinigung durchgeführt. Zur Verminderung des Particle Release wird insbesondere eine Reinigung mittels Ultraschall gewählt.

Schließlich kann auf den Kühlkörper 14 innen und außenseitig jeweils ein Stützring 26, 28 aus hochfestem CFC aufgepresst sein.

Die Preform kann vor jedem Imprägnierschritt bzw. Wärmebehandlungsschritt von dem Kern entfernt werden. Selbstverständlich besteht auch die Möglichkeit, nach Beendigung der Wärmebehandlung die Preform von dem Kern abzuziehen. Das Abziehen der Preform sollte jedoch erst dann erfolgen, wenn bei den durchzuführenden Verfahrensschritten sichergestellt ist, dass eine Verformung der sich nicht mehr auf dem Kern befindenden Form unterbleibt. Daher sollte auch die Preform zumindest vor jedem Hochtemperaturbehandlungsschritt den Kern umgeben, gleichwenn in vorausgehenden Verfahrensschritten ein Abziehen erfolgt sein kann.

## Patentansprüche

1. Drehanode (10), insbesondere einer Röntgenröhre, mit einer Drehachse (16) umfassend einen die Drehachse koaxial umgebenden rotationssymmetrisch ausgebildeten Kühlkörper (14) aus Kohlefaserwerkstoff mit entlang der Drehachse sich erstreckenden Kohlenstofffasern sowie einen quer zur Drehachse sich erstreckenden Brennring (12),
**dadurch gekennzeichnet,**
**dass** der Kühlkörper (14) unter Verwendung dem Tailored-Fiber-Placement-Verfahren (TFP) hergestellten Perform hergestellt ist, ass der Kühlkörper eine Hohlzylinderform aufweist und einteilig ausgebildet ist, dass die Kohlenstofifasern (22) über ihre gesamte Länge parallel oder im Wesentlichen parallel zu der Achse (16) verlaufen und eine Wärmeleitfähigkeit λ mit λ ≥ 250 W/m · K aufweisen und dass die Kohlenstoffasern über eine Kohlenstoff enthaltende Matrix verbunden sind, deren Graphitkristallite entlang der Kohlenstofffasern ausgerichtet sind.

2. Drehanode nach Anspruch 1,
**dadurch gekennzeichnet,**
**dass** der Kühlkörper (14) entlang dessen Umfangs- und/oder Innenfläche einen Stützring (26, 28) aufweist, der vorzugsweise auf den Kühlkörper aufgepresst ist und insbesondere aus einem Kohlefaserwerkstoff (CFC) besteht.

3. Drehanode nach Anspruch 1 oder 2,
**dadurch gekennzeichnet,**
**dass** der Kühlkörper (14) eine Dichte ρ mit 1,5 g/cm³ ≤ ρ 2,2 g/cm³, insbesondere mit 1,75 g/cm³ ≤ ρ ≤ 2,0 g/cm³ aufweist.

4. Verfahren zur Herstellung eines rotationssymmetrischen Kühlkörpers einer um eine Drehachse drehbaren Drehanode (10) mit entlang der Achse verlaufenden Kohlenstofifasern (22) hoher Wärmeleitfähigkeit,
**gekennzeichnet durch** die Verfahrensschritte
- Herstellen einer streifenförmigen Preform nach dem Tailored-Fiber-Placement-Verfahren (TFP) **durch** Aufnähen von Kohlenstofffasern (22) auf einem Gewebegrundmaterial (20) derart, dass bei der zu nutzenden Preform die Kohlenstofffasern parallel oder im Wesentlichen parallel zueinander verlaufen,
- Wickeln der streifenförmigen Preform auf einen Zylinderkörper,
- Imprägnieren der Preform mit Kohlenstoff oder einem **durch** Carbonisieren in Kohlenstoff umwandelnden Material,
- Wärmebehandlung der imprägnierten Preform,
- ein- oder mehrfaches Nachverdichten der wärmebehandelten Preform,
- Hochtemperaturbehandlung und
- mechanische Endbearbeitung des so hergestellten Körpers zur Erzielung der Endgeometrie des Kühlkörpers.

5. Verfahren nach Anspruch 4,
**dadurch gekennzeichnet,**
**dass** die Kohlenstofffasern (22) in Form von Kohlenstofflangfasern bzw. Endloskohlenstofffasern mäanderförmig auf das Gewebegrundmaterial (20) aufgenäht werden, deren vorzugsweise über Ränder des Gewebegrundmaterials vorstehende gebogen verlaufende Abschnitte (24) vor dem Aufwickeln auf den Zylinderkörper oder nach dem Abziehen der Preform von dem Zylinderkörper abgeschnitten werden.

6. Verfahren nach Anspruch 4 oder 5,
**dadurch gekennzeichnet,**
**dass** die Preform mit einer Zugkraft F auf den Zylinderkörper derart aufgewickelt wird, dass sich in der gewickelten Preform ein Faservolumengehalt V mit 40 Vol.-% ≤ V ≤ 80 Vol.%, insbesondere 60 Vol.-% ≤ V ≤ 70 Vol.% ergibt, wobei insbesondere die Zugkraft F eingestellt wird auf 3 kp ≤ F ≤ 15 kp, insbesondere 5 kp ≤ F ≤ 10 kp und/oder auf die Preform während des Aufwickelns auf den Zylinderkörper Andruckrollen einwirken.

7. Verfahren nach zumindest einem der Ansprüche 4 bis 6,
**dadurch gekennzeichnet,**
**dass** die auf den Zylinderkörper gewickelte Preform durch Gasphasenimprägnierung und/oder Flüssigimprägnierung imprägniert wird, wobei insbesondere die Gasphasenimprägnierung mit Pyrokohlenstoff (PyC) erfolgt.

8. Verfahren nach zumindest einem der Ansprüche 4 bis 7,
**dadurch gekennzeichnet,**
**dass** die Preform vor oder nach dem Aufwickeln mit einem Harz und/oder Pech behandelt wird und vorzugsweise bei einer Temperatur T_{C} mit 700 °C ≤ T_{C} ≤ 1200 °C, insbesondere 900°C ≤ T_{C} ≤ 1050 °C carbonisiert wird.

9. Verfahren nach zumindest einem der Ansprüche 4 bis 8,
**dadurch gekennzeichnet,**
**dass** die imprägnierte Preform bei einer Temperatur T_{G} mit 2400 °C ≤ T_{G} ≤ 3500 °C, insbesondere 2600 °C ≤ T_{G} ≤ 3300 °C graphitiert wird.

10. Verfahren nach zumindest einem der Ansprüche 4 bis 9,
**dadurch gekennzeichnet,**
**dass** das zum Imprägnieren verwendete Material hochwärmeleitende Füllstoffe enthält.

11. Verfahren nach zumindest einem der Ansprüche 4 bis 10,
**dadurch gekennzeichnet,**
**dass** nach der Endbearbeitung des Körpers dieser mit einem Material beschichtet wird, das einen Emissionsfaktor mit ε 0,5 ≤ ε < I, vorzugsweise 0,8 ≤ ε ≤ 0,9 besitzt, wobei insbesondere der Körper im CVD-Verfahren mit PyC beschichtet wird.

12. Verfahren nach zumindest einem der Ansprüche 4 bis 11,
**dadurch gekennzeichnet,**
**dass** der Körper nach der Endbearbeitung und vor der Beschichtung insbesondere einer Gasreinigung unterzogen und/oder mittels Ultraschall gereinigt wird.

13. Verfahren nach zumindest einem der Ansprüche 4 bis 12,
**dadurch gekennzeichnet,**
**dass** die Preform nach der Hochtemperaturbehandlung von dem Zylinderkörper abgezogen wird.

14. Verfahren nach zumindest einem der Ansprüche 4 bis 13,
**dadurch gekennzeichnet,**
**dass** zum Ausrichten von Graphitkristalliten entlang der Kohlenstofffasern die Preform mit einem gut graphitierbaren Stoff wie Pech oder PyC imprägniert wird.

15. Verfahren nach zumindest einem der Ansprüche 4 bis 14,
**dadurch gekennzeichnet,**
**dass** zur Herstellung der Preform Kohlenstoftiasern mit einem Durchmesser D mit 4 µm ≤ D ≤ 9 µm verwendet werden.

## Claims

1. Rotating anode (10), especially of an x-ray tube, with a rotation axis (16) comprising a cooling element (14), surrounding the rotation axis coaxially and consisting of carbon fiber material with carbon fibers extending along the rotation axis, as well as a focal ring (12) extending perpendicular to the rotation axis,
**characterized in**
**that** the cooling element (14) is produced using a preform produced according to the tailored fiber placement method (TFP), that the cooling element has a shape of a hollow cylinder and is constructed as one piece, that the carbon fibers (22) run parallel or substantially parallel along their entire length to the axis (16) and have a heat conductivity λ with λ ≥ 250 W/m · K, and that the carbon fibers are connected via a matrix containing carbon, with graphite crystallites aligned along the carbon fibers.

2. Rotating anode according to claim 1,
**characterized in**
**that** the cooling element (14) comprises a support ring (26, 28) along its circumferential and/or interior surface which preferably is pressed on the cooling element and consists of a carbon fiber material (CFC).

3. Rotating anode according to claim 1 or 2,
**characterized in**
**that** the cooling element (14) has a ρ with 1.5 g/cm³ ≤ ρ 2.2 g/cm³, especially with 1.75 g/cm³ ≤ ρ 2.0 g/cm³.

4. Method for producing a rotationally symmetrical cooling element of a rotating anode (10) being rotatable around a rotation axis with carbon fibers (22) of a high heat conductivity running along the axis,
**characterized by** the method steps
- producing a stripe-shaped preform according to the tailored fiber placement method (TFP) by sewing of carbon fibers (22) on a textile base material (20) such, that with the preform to be used the carbon fibers run parallel or substantially parallel to each other,
- winding the stripe-shaped preform on a cylindrical body,
- impregnating the preform with carbon or a material converted by carbonizing to carbon,
- heat treatment of the impregnated perform,
- recompressing the heat-treated perform once or repeatedly,
- high temperature treatment;
- mechanical finishing of the body thus produced to attain the final geometry of the cooling element.

5. Method according to claim 4,
**characterized in**
**that** the carbon fibers (22) in form of carbon long fibers, respectively endless carbon fibers are sewn in a meandering pattern onto the textile base material, whose bent sections (24) preferably protruding beyond edges of the textile base material are cut off before winding on the cylindrical body, or after removal of the preform from the cylindrical body.

6. Method according to claim 4 or 5,
**characterized in**
**that** the preform is winded up on the cylindrical body with a tensile force F such that in the winded up preform is a fiber volume content V with 40 vol% ≤ V ≤ 80 vol%, especially 60 vol% ≤ V ≤ 70 vol%, with the tensile force F being adjusted to 3 kip ≤ F ≤ 15 kp, especially 5 kp ≤ F ≤ 10 kp and/or pressure rollers acting on the preform during the winding up on the cylindrical body.

7. Method according to at least one of claims 4 to 6,
**characterized in**
**that** the preform winded up on the cylindrical body is impregnated by means of gas phase impregnation and/or liquid impregnation, with especially the gas phase impregnation happening with pyrocarbon (PyC).

8. Method according to at least one of claims 4 to 7,
**characterized in**
**that** the preform is treated before or after the winding with a resin and/or pitch and preferably is carbonized at a temperature T_{c}, with 700 °C ≤ T_{C} ≤ 1200 °C, especially with 900 °C ≤ T_{C} ≤ 1050 °C.

9. Method according to at least one of claims 4 to 8,
**characterized in**
**that that** the impregnated preform is graphitized at a temperature T_{G} with 2400 °C ≤ T_{G} ≤ 3500 °C, especially with 2600 °C ≤ T_{G} ≤ 3300 °C.

10. Method according to at least one of claims 4 to 9,
**characterized in**
**that** the material used for impregnation contains high-temperature conductive filler materials.

11. Method according to at least one of claims 4 to 10,
**characterized in**
**that** after finishing of the body this is coated with a material which has an emission factor of ε 0.5 ≤ ε < 1, preferably 0.8 ≤ ε ≤ 0.9, especially with the object being coated with PyC using the CVD method.

12. Method according to at least one of claims 4 to 11,
**characterized in**
**that** after finishing and before coating the object is subjected in particular to a gas cleaning and/or is cleaned by means of ultrasound.

13. Method according to at least one of claims 4 to 12,
**characterized in**
**that** the preform is removed from the cylindrical body after the high temperature treatment.

14. Method according to at least one of claims 4 to 13,
**characterized in**
**that** the preform is impregnated with a material that graphitizes well, in order to align graphite crystallites along the carbon fibers.

15. Method according to at least one of claims 4 to 14,
**characterized in**
**that** for the production of the preform are used carbon fibers with a diameter D, with 4 µm ≤ D ≤ 9 µm.

## Revendications

1. Anode tournante (10), en particulier d'un tube à rayons X, avec un axe de rotation (16), comprenant un élément de refroidissement (14) à symétrie de révolution entourant coaxialement l'axe de rotation et fait d'un matériau en fibres de carbone avec des fibres de carbone s'étendant le long de l'axe de rotation ainsi qu'avec un anneau-cible (12) s'étendant transversalement par rapport à l'axe de rotation,
**caractérisée en ce**
**que** l'élément de refroidissement (14) est fabriqué en utilisant une préforme confectionnée selon la technologie Tailored-Fiber-Placement (TFP), que l'élément de refroidissement présente la forme d'un cylindre creux et est constitué d'une seule pièce, que sur toute leur longueur, les fibres de carbone (22) s'étendent parallèlement ou quasiment parallèlement à l'axe (16) et présentent une conductibilité thermique λ telle que λ ≥ 250 W/(m . K), et que les fibres de carbone sont reliées par une matrice contenant du carbone, dont les cristallites de graphite sont orientées le long des fibres de carbone.

2. Anode tournante selon la revendication 1,
**caractérisée en ce**
**que** l'élément de refroidissement (14) présente le long de sa face circonférentielle et/ou intérieure une bague d'appui (26, 28) qui est de préférence engagée par pression sur l'élément de refroidissement, et est constituée en particulier d'un matériau en fibres de carbone (CFC).

3. Anode tournante selon la revendication 1 ou 2,
**caractérisée en ce**
**que** l'élément de refroidissement (14) présente une masse volumique ρ telle que 1,5 g/cm³ ≤ ρ ≤ 2,2 g/cm³, en particulier telle que 1,75 g/cm³ ≤ ρ ≤ 2,0 g/cm³.

4. Procédé de fabrication d'un élément de refroidissement à symétrie de révolution d'une anode tournante (10) mobile autour d'un axe de rotation, avec des fibres de carbone (22) à haute conductibilité thermique s'étendant le long de l'axe,
**caractérisé par** les étapes suivantes
- confection d'une préforme en forme de bande selon la technologie Tailored-Fiber-Placement (TFP) par couture de fibres de carbone (22) sur un matériau de base tissulaire (20) de manière telle que les fibres de carbone s'étendent parallèlement ou quasiment parallèlement entre elles sur la préforme devant être utilisée,
- enroulement de la préforme en forme de bande sur un corps cylindrique,
- imprégnation de la préforme avec du carbone ou un matériau transformé en carbone par carbonisation,
- traitement thermique de la préforme imprégnée,
- compactage simple ou répété de la préforme traitée thermiquement,
- traitement à haute température et
- finition mécanique du corps ainsi fabriqué afin d'obtenir la géométrie définitive de l'élément de refroidissement.

5. Procédé selon la revendication 4,
**caractérisé en ce**
**que** les fibres de carbone (22) sous forme de fibres longues de carbone ou de filaments de carbone sont cousues en méandres sur le matériau de base tissulaire (20), dont les parties coudées (24) dépassant de préférence des bords du matériau de base tissulaire sont découpées avant l'enroulement sur le corps cylindrique ou après le retrait de la préforme du corps cylindrique.

6. Procédé selon la revendication 4 ou 5,
**caractérisé en ce**
**que** la préforme est enroulée sur le corps cylindrique avec une force de traction F de manière telle que dans la préforme enroulée est obtenue une teneur volumétrique en fibres V telle que 40 % vol. ≤ V ≤ 80 % vol., en particulier 60 % vol. ≤ V ≤ 70 % vol., sachant qu'en particulier la force de traction F est réglée sur 3 kp ≤ F ≤ 15 kp, en particulier 5 kip ≤ F ≤ 10 kp et/ou que des galets-presseurs agissent sur la préforme pendant l'enroulement sur le corps cylindrique.

7. Procédé selon au moins une des revendications 4 à 6,
**caractérisé en ce**
**que** la préforme enroulée sur le corps cylindrique est imprégnée par imprégnation en phase gazeuse et/ou imprégnation liquide, sachant qu'en particulier l'imprégnation en phase gazeuse est effectuée avec du pyrocarbone (PC).

8. Procédé selon au moins une des revendications 4 à 7,
**caractérisé en ce**
**qu'**avant ou après l'enroulement, la préforme est traitée avec une résine et/ou une poix, et de préférence carbonisée sous une température T_{C} telle que 700 °C ≤ T_{C} ≤ 1200 °C, en particulier 900 °C ≤ T_{C} ≤ 1050 °C.

9. Procédé selon au moins une des revendications 4 à 8,
**caractérisé en ce**
**que** la préforme imprégnée est graphitée sous une température T_{G} telle que 2400 °C ≤ T_{G} ≤ 3500 °C, en particulier 2600 °C ≤ T_{G} ≤ 3300 °C.

10. Procédé selon au moins une des revendications 4 à 9,
**caractérisé en ce**
**que** le matériau utilisé pour imprégner contient des matières de remplissage thermoconductrices.

11. Procédé selon au moins une des revendications 4 à 10,
**caractérisé en ce**
**qu'**après la finition du corps, ce dernier est revêtu d'un matériau possédant un facteur d'émission ε tel que 0,5 ≤ ε < 1, de préférence 0,8 ≤ ε ≤ 0,9, le corps étant en particulier recouvert de pyrocarbone selon le procédé CVD (dépôt chimique en phase vapeur).

12. Procédé selon au moins une des revendications 4 à 11,
**caractérisé en ce**
**qu'**après la finition et avant l'opération de revêtement, le corps est en particulier soumis à un lavage au gaz et/ou nettoyé avec des ultrasons.

13. Procédé selon au moins une des revendications 4 à 12,
**caractérisé en ce**
**qu'**après le traitement à haute température, la préforme est retirée du corps cylindrique.

14. Procédé selon au moins une des revendications 4 à 13,
**caractérisé en ce**
**que** pour orienter des cristallites de graphite le long des fibres de carbone, la préforme est imprégnée d'une substance se prêtant bien à la graphitisation, telle que de la poix ou du pyrocarbone.

15. Procédé selon au moins une des revendications 4 à 14,
**caractérisé en ce**
**que** des fibres de carbone ayant un diamètre D tel que 4 µm ≤ D ≤ 9 µm sont utilisées pour confectionner la préforme.
